# EUROPÄISCHE PATENTSCHRIFT

(11) **EP 0 840 856 B1**
(45) Veröffentlichungstag und Bekanntmachung des Hinweises auf die Patenterteilung: **05.03.2003**
(21) Anmeldenummer: 96925713.8
(22) Anmeldetag: 11.07.1996
(51) Int. Cl.: F04B 53/12

(54) **KOLBENPUMPE**
PISTOM PUMP
POMPE A PISTON

(30) Priorität: 27.07.1995 DE 19527401
(43) Veröffentlichungstag der Anmeldung: 13.05.1998
(73) Patentinhaber: Continental Teves AG & Co. oHG, 60488 Frankfurt (DE)
(72) Erfinder: BECK, Erhard, D-35781 Weilburg (DE)
(86) Internationale Anmeldenummer: EP9603029
(87) Internationale Veröffentlichungsnummer: WO97005388

(56) Entgegenhaltungen:
- EP-A- 0 637 690
- DE-A- 4 242 420
- DE-U- 9 319 462

## Beschreibung

Die vorliegende Erfindung befaßt sich mit einer Kolbenpumpe nach dem Oberbegriff des Anspruchs 1.

Eine Kolbenpumpe ist beispielsweise aus der DE 42 42 420 A1 bekannt. Diese bekannte Pumpe hat den Nachteil, daß sie aus vielen Einzelteilen besteht, insbesondere der Pumpenkolben, was die Montage erschwert, weil besonders die Ventilfeder die Einzelteile auseinanderdrückt.

Die DE 93 19 462 U1 offenbart eine gattungsgemäße Kolbenpumpe mit einem Federgehäuse, das einerseits mit dem Pumpenkolben und andererseits mit einer Druckfeder zusammenwirkt, die den Pumpenkolben vorspannt. Dabei ist das Federgehäuse mittels Klammern am Pumpenkolben befestigt. Bei der Montage von Kolben und Federgehäuse müssen diese Klammern aufwendig entweder von Hand oder maschinell auseinandergedrückt werden, damit sie hinter einen Abschnitt des Kolbens greifen können.

Aufgabe der vorliegenden Erfindung ist es daher, eine gattungsgemäße Kolbenpumpe so weiter zu entwickeln, daß sie einfacher zu montieren und damit kostengünstiger in der Herstellung ist. Gleichzeitig soll die Funktion der Kolbenpumpe verbessert werden.

Dies wird durch Merkmalskombination von Anspruch 1 sowie die in den Unteransprüchen angegebenen Maßnahmen erreicht. Der Pumpenkolben der erfindungsgemäßen Pumpe ist auf einfachste Art und Weise vormontierbar, das Einlaßventil, das vorzugsweise ein Federgehäuse, ein Schließglied und eine Ventilfeder umfaßt, ist direkt mit dem Pumpenkolben verbunden. Daraus ergibt sich eine komplette Baueinheit, die als ein Teil geprüft, gelagert und später in die Kolbenpumpe eingebaut werden kann, ohne daß sie in ihre Einzelteile zerfällt oder in besonderen Halteeinrichtungen gelagert werden muß. Erfindungsgemäß weist dazu der Pumpenkolben eine flache Fügefase oder auch Aufweitrampe auf, die in einen Einstich übergeht, in dem Elemente des Federgehäuses einrasten können. Die Fügefase ermöglicht ein sanftes Aufweiten des Federtopfes bzw. -gehäuses und vermeidet somit dessen Brechen bzw. ein Nachlassen von dessen Federkraft.

Dabei können am Federtopf Formschlußelemente vorgesehen sein, die in den Einstich am Pumpenkolben einrasten. Dazu wird das Federgehäuse mit radialem Untermaß gefertigt, die Formschlußelemente können z.B. radial nach außen bzw. nach innen geprägte Warzen sein, die sowohl einen Eingriff in den Pumpenkolben als auch an das Ende der Druckfeder ermöglichen.

Vorzugsweise ist das Federgehäuse mit Stegelementen versehen, die an ihrem freien Ende die Formschlußelemente tragen. Die Stegelemente sind radialfedernd weich gestaltet, so daß es beim Montieren des Federgehäuses an den Pumpenkolben zu keinerlei plastischen Verformungen kommen kann. Die Freiräume zwischen den Stegelemente sind entsprechend groß dimensioniert.

Durch eine besondere Oberflächenbehandlung ist sichergestellt, daß sich die innen angebrachten Formschlußelemente beim Montieren nicht verschleißen, und der Reibungswiderstand niedrig gehalten wird. Vorteilhafterweise wird dazu eine Oberflächenhärtung des Federgehäuses vorgenommen, bei der die Kernduktilität nicht verändert wird, wodurch ein eventuelles Abbrechen der Stegelemente vermieden wird.

Mit Vorteil ist desweiteren am dem Pumpenkolben entgegengesetzten Ende des Federgehäuses in diesem zumindest eine Öffnung bzw. Bohrung vorgesehen. Dadurch wird der Wirkungsgrad der Pumpe erhöht, weil sich durch dies Maßnahme der Durchfluß verbessert und schnelle Bewegungen des vorzugsweise als Kugel ausgebildeten Schließgliedes bei hohen Pumpfrequenzen ermöglicht werden.

Desweiteren kann auch noch die Druckfeder, die den Pumpenkolben vorspannt, an diesem bzw. an dem Federgehäuse befestigt sein. So ergibt sich zusätzlich der Vorteil, daß die komplette Einheit aus Druckfeder, Einlaßventil und Kolben an der Feder aus dem Gehäuse gezogen werden kann. Die Verbindung der einzelnen Funktionselemente erfolgt im montierten Zustand durch die Funktionselemente selbst und zwar in erste Linie durch Pumpenkolben, Federgehäuse und die als Kolbenrückstellfeder dienende Druckfeder. Zumindest eine dieser Verbindungen ist dabei reib- bzw. kraftschlüssig und/oder formschlüssig ausgebildet. Beispielsweise kann die Druckfeder in ihrem mit dem Federtopf in Verbindung stehenden Bereich mit radialem Untermaß in bezug auf die Anlagefläche am Federtopf ausgebildet sein. Eine entsprechende reib- bzw. kraftschlüssige und/oder formschlüssige Verbindung kann aber auch zwischen Federtopf und Kolben vorgesehen sein.

Wenn die Druckfeder reib- bzw. kraftschlüssig mit dem Federgehäuse verbunden ist, ist die Druckfeder vorteilhafterweise an diesem Ende konisch verjüngend ausgebildet, wodurch der Reib- bzw. Kraftschluß entsteht. Bei der Montage der Feder ist es desweiteren von besonderem Vorteil, wenn beide Federenden konisch verjüngend ausgebildet sind, so daß die Montagerichtung der Druckfeder nicht beachtet werden muß.

Weitere Vorteile der Erfindung ergeben sich aus der nachfolgenden Beschreibung anhand der Abbildungen. Dabei zeigen :
- Fig. 1: einen Ausschnitt der erfindungsgemäßen Kolbenpumpe im Längsschnitt und
- Fig. 2: das Federgehäuse der Kolbenpumpe nach Fig. 1 in vergrößerter Darstellung.

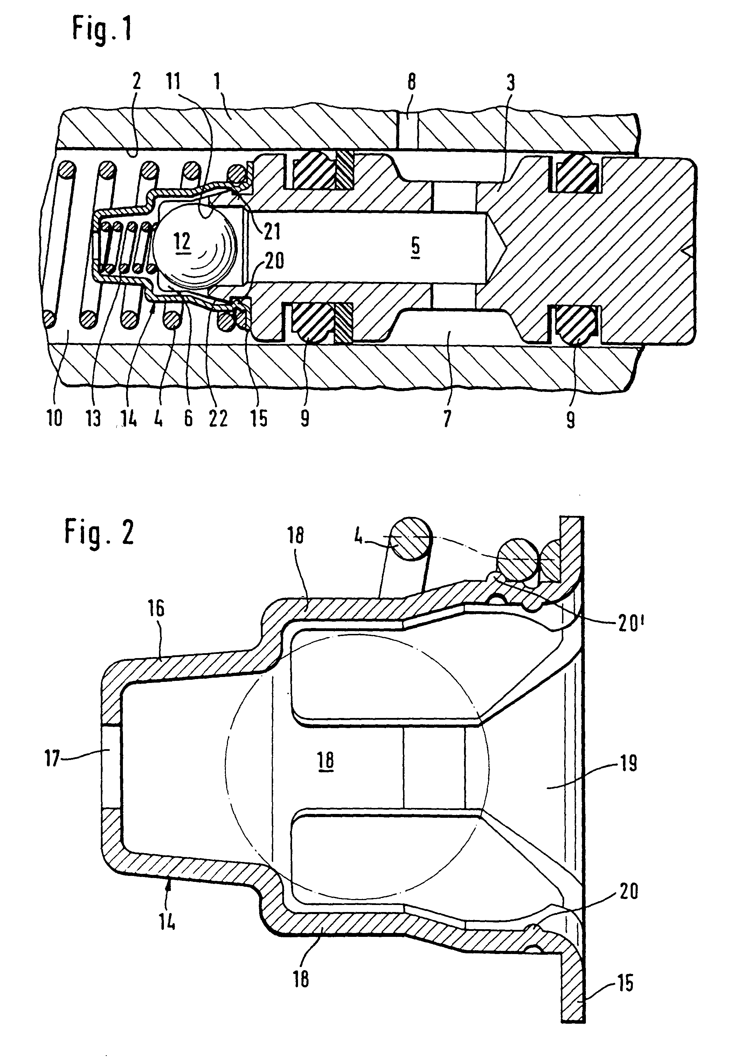

In Fig. 1 erkennt man das Gehäuse 1 einer erfindungsgemäßen Kolbenpumpe. In dem Gehäuse 1 ist eine zylindrische Bohrung 2 angeordnet, in der ein Pumpenkolben 3 verschiebbar geführt ist. Der Pumpenkolben 3 wird auf der in der Abbildung rechten Seite von einem nicht dargestellten Exzenter angetrieben, gegen den er durch eine auf der linken Seite der Abbildung angeordnete Druckfeder 4 vorgespannt ist. Im Pumpenkolben 3 ist eine Ansaugbohrung 5 angeordnet, die einerseits von einem rückschlagventilartig schließenden Einlaßventil 6 begrenzt wird und andererseits in einen Ringraum 7 mündet, der über einen Ansauganschluß 8 mit einer Druckmittelquelle verbunden ist. Dies kann ein druckloser Vorratsbehälter aber auch eine anders geartete Druckmittelquelle, beispielsweise ein Druckspeicher oder ähnliches sein. Der Pumpenkolben 3 ist durch Dichtelemente 9 gegenüber der zylindrischen Bohrung 2 abgedichtet und trennt diese in den Ringraum 7 und eine Arbeitskammer 10 auf. Die Arbeitskammer 10 steht über ein hier nicht dargestelltes Druckventil mit der Druckseite eines von der erfindungsgemäßen Kolbenpumpe versorgten hydraulischen Systems in Verbindung.

Das Einlaßventil besteht aus einem am Pumpenkolben 3 angeordneten Ventilsitz 11 und einem daran zur Anlage kommenden Schließglied 12, welches mittels einer Ventilfeder 13 gegen den Ventilsitz 11 vorgespannt ist. Die Ventilfeder 13 stützt sich am Boden eines Federgehäuses 14 ab, welches ein beispielsweise als Kugel ausgebildete Schließglied 12 umgibt und am Pumpenkolben 3 befestigt ist. Weiterhin weist das Federgehäuse 14 einen radial nach außen vorspringenden Flansch 15 auf, der an einer Ringfläche des Pumpenkolbens 3 einerseits anliegt und an dem sich andererseits die Druckfeder 4 abstützt.

Fig. 2 zeigt das Federgehäuse 14 in vergrößerter Darstellung. Es weist einen topfförmigen Bereich 16 auf, in dessen Boden sich erfindungsgemäß eine Öffnung 17 befindet, die den Durchfluß von Druckmittel ermöglicht. Mittels der Öffnung 17 wird beispielsweise im Vergleich zum Fluß des Druckmittels nur über Aussparungen in der Mantelfläche des Federgehäuses 14 der Wirkungsgrad der Kolbenpumpe insbesondere bei Kälte verbessert, da hierdurch schnellere Bewegungen des Schließgliedes 12 bei höheren Pumpenfrequenzen möglich sind. Am Rand des topfförmigen Bereichs 16 sind Stegelemente 18 angeordnet, die sich bezüglich der Bohrung 2 axial erstrecken und zu ihrem Ende 19 hin verbreitern, so daß die den Flansch 15 bildenden radialen Vorsprünge nahezu lückenlos aneinander angrenzen, während im Hauptbereich der Stegelemente 18 große Lücken zwischen den einzelnen Stegelemente 18 bestehen. Die nahezu planaren Hauptbereiche der Stegelemente 18 lassen somit ein federndes Aufbiegen nach radial außen zu. An den Enden 19 der Stegelemente 18 sind Formschlüßelemente 20,20' angeordnet. Dabei handelt es sich zum einen um radial nach innen vorstehende Warzen 20 und zum anderen um radial nach außen vorstehende Warzen 20'. An den radial nach außen vorstehenden Formschlußelementen 20' greift der Endbereich der Druckfeder 4 an, wodurch diese am Federgehäuse 14 befestigt ist. Dies ist ausschnittsweise im oberen Teil der Fig. 2 skizziert. Eine alternative Ausgestaltung ist dazu in Fig. 1 abgebildet. Dabei verjüngt sich die Druckfeder 4 in ihrem Endbereich so stark, daß sie reib- bzw. kraftschlüssig am Bereich des Endes 19 der Stegelemente 18 anliegt. Die radial nach innen vorstehenden Formschlußelemente 20 greifen, wie in Fig. 1 zu sehen, an einem Einstich 21 im Pumpenkolben 3 an. An den Einstich 21 schließt sich in Richtung auf die Arbeitskammer 10 zu eine Fügefase 22 an, die etwa um 15° gegenüber der Zylinderachse der Bohrung 2 geneigt angeordnet ist.

Zur Montage des Pumpenkolbens 3 werden beispielsweise die Ventilfeder 13 und das Schließglied 12 in das Federgehäuse 14 eingebracht, welches mit seinem offenen Ende 19 auf den Pumpenkolben 3 geschoben wird. Dabei gleiten die Formschlußelemente 20 an der Fügefase 22 entlang, weiten dabei die Stegelemente 18 radial nach außen auf und schnappen bei Erreichen des Einstichs 21 hinter diesen ein. Dabei federn die Stegelemente 18 zurück, Federgehäuse 14 und Pumpenkolben 3 sind miteinander verbunden. Anschließend kann die Druckfeder 4 am Federgehäuse 14 befestigt werden, entweder durch Reibschluß oder durch Formschluß mit den Formschlußelementen 20'.

Alternativ und bevorzugt besteht aber auch die Möglichkeit, zunächst die Druckfeder 4 am Federgehäuse 14 und erst anschließend dieses am Pumpenkolben 3 zu befestigen. Dabei rastet die Feder 4 mit dem darin befindlichen Federgehäuse 14 am Pumpenkolben 3 ein, vorzugsweise bevor sie ihre Blocklänge erreicht hat. Der radial auf Untermaß ausgelegte Endbereich der Druckfeder 4, der sich vorzugsweise an zumindest einem Ende konisch verjüngt, bewirkt ein radiales Anpressen der Enden 19 der Stegelemente 18 an den Pumpenkolben 3, wodurch die vormontierte Einheit, bestehend aus Pumpenkolben 3, Einlaßventil 6 und Druckfeder 4 sicher zusammengehalten wird.

Durch eine besondere Oberflächenbehandlung wird sichergestellt, daß sich die Formschlußelemente 20, 20' beim Fügen nicht verschleißen und daß das Aufschieben der einzelnen Bauteile aufeinander mit möglichst geringer Reibung erfolgt.

Das so erhaltene, am Pumpenkolben 3 befestigte Einlaßventil 6 steht immer unter der durch die Ventilfeder 13 vorbestimmten Vorspannung, unabhängig von der Stellung des Pumpenkolbens 3 bezüglich der zylindrischen Bohrung 2. Lediglich die Beschleunigung des Pumpenkolbens 3 wird der von der Ventilfeder 13 ausgeübten Kraft überlagert (Komponente). Dies bewirkt, daß in dem in der Abbildung linken Umkehrpunkt des Pumpenkolbens 3 das Einlaßventil 6 besonders leicht öffnet, was ein Ansaugen von Druckmittel aus dem Ringraum 7 in die Arbeitskammer 10 erleichtert. Das heißt, der dynamisch niedrigste Öffnungsdruck herrscht beim Durchfahren dieses oberen Totpunkts, was einer guten Füllung der Arbeitskammer 10 zugute kommt. Dies ist insbesondere dann gewünscht, wenn die erfindungsgemäße Kolbenpumpe zur Versorgung eines elektronisch geregelten hydraulischen Bremssystems eingesetzt ist. Derartige Systeme erfordern es, daß beispielsweise im Falle einer Schlupfregelung oder auch einer Regelung zur Fahrstabilität des zugehörigen Kraftfahrzeugs von der Kolbenpumpe ein Druck aufzubauen ist, ohne daß im Ringraum 7 ein Vordruck anliegt. Die Kolbenpumpe muß daher in der Lage sein, auch in diesem Fall eine genügende Menge von Druckmittel ansaugen zu können.

## Patentansprüche

1. Kolbenpumpe für ein hydraulisches System mit einer zylindrischen Bohrung (2), mit einem in dieser zylindrischen Bohrung (2) hin- und herbeweglichen Pumpenkolben (3), der als bewegliche Wand eine Arbeitskammer (10) begrenzt, und mit einem rückschlagventilartig schließenden Einlaßventil (6), das ein Schließglied (12) und einen Ventilsitz (11) aufweist, wobei das Schließglied (12) mittels einer Ventilfeder (13) vorgespannt ist, die in einem Federgehäuse (14) angeordnet ist, welches einerseits mit dem Pumpenkolben (3) und andererseits mit einer Druckfeder (4) zusammenwirkt, die den Pumpenkolben (3) vorspannt, wobei das Federgehäuse (14) an dem Pumpenkolben (3) und die Druckfeder (4) an dem Federgehäuse (14) befestigt ist, wobei zumindest eine Befestigung eine reib- bzw. kraftschlüssige und/oder formschlüssige Verbindung ist, **dadurch gekennzeichnet, daß** der Pumpenkolben (3) an seinem dem Federgehäuse (14) zugewandten Ende eine flache Fügefase bzw. Aufweitrampe (22) aufweist, die in einen Einstich (21) übergeht, der zur Aufnahme von Elementen (20) des Federgehäuses (14) geeignet ist.

2. Kolbenpumpe nach Anspruch 1, **dadurch gekennzeichnet, daß** das Federgehäuse (14) Formschlußelemente (20,20') aufweist, die mit dem Einstich (21) des Pumpenkolbens (3) bzw. mit der Druckfeder (4) zusammenwirken.

3. Kolbenpumpe nach Anspruch 2, **dadurch gekennzeichnet, daß** das Federgehäuse (14) mit Stegelementen (18) versehen ist, die ein freies Ende (19) aufweisen, an welchem die Formschlußelemente (20,20') angeordnet sind.

4. Kolbenpumpe nach Anspruch 3, **dadurch gekennzeichnet, daß** die freien Enden (19) der Stegelemente (18) eine verschleißfeste und/oder gleitfähige Oberfläche aufweisen.

5. Kolbenpumpe nach einem der vorhergehenden Ansprüche, **dadurch gekennzeichnet, daß** das Federgehäuse (14) am dem Pumpenkolben (3) entgegengesetzten Ende zumindest eine Öffnung (17) aufweist.

6. Kolbenpumpe nach Anspruch 1, **dadurch gekennzeichnet, daß** die Druckfeder (4) an dem mit dem Federgehäuse (14) verbundenen Ende konisch verjüngend ausgebildet ist.

7. Kolbenpumpe nach Anspruch 6, **dadurch gekennzeichnet, daß** die Druckfeder (4) an beiden Enden konisch verjüngend ausgebildet ist.

## Claims

1. Piston pump for a hydraulic system including a cylindrical bore (2), a pump piston (3) adapted to reciprocate in said cylindrical bore (2) and bounding as a movable wall a working chamber (10), and an inlet valve (6) which closes in the way of a non-return valve and has a closure member (12) and a valve seat (11), the closure member (12) being preloaded by a valve spring (13) which is arranged in a spring housing (14) that cooperates with the pump piston (3), on the one hand, and with a compression spring (4) preloading the pump piston (3), on the other hand, wherein the spring housing (14) is attached to the pump piston (3) and the compression spring (4) is attached to the spring housing (14), with at least one attachment being effected by way of frictional or operative and/or positive engagement,
**characterized in that** at its end close to the spring housing (14), the pump piston (3) includes a flat jointing chamfer or expanding ramp (22), respectively, which passes over into a recess (21) appropriate for accommodation of elements (20) of the spring housing (14).

2. Piston pump as claimed in claim 1,
**characterized in that** the spring housing (14) includes form-lock elements (20, 20') which interact with the recess (21) of the pump piston (3) or with the compression spring (4), respectively.

3. Piston pump as claimed in claim 2,
**characterized in that** the spring housing (14) includes web elements (18) having a free end (19) on which the form-lock elements (20, 20') are provided.

4. Piston pump as claimed in claim 3,
**characterized in that** the free ends (19) of the web elements (18) have a wear-resistant and/or sliding surface.

5. Piston pump as claimed in any one of the preceding claims,
**characterized in that** at its end opposite to the pump piston (3), the spring housing (14) has at least one opening (17).

6. Piston pump as claimed in claim 1,
**characterized in that** the compression spring (4) tapers conically in shape at its end connected to the spring housing (14).

7. Piston pump as claimed in claim 6,
**characterized in that** the compression spring (4) tapers conically in shape at both its ends.

## Revendications

1. Pompe à piston pour un système hydraulique, comprenant un alésage cylindrique (2) contenant un piston de pompe (3) pouvant être déplacé en va-et-vient à l'intérieur de cet alésage cylindrique (2), délimitant comme une paroi mobile une chambre de travail (10), et comprenant un clapet d'admission (6) fermant à la manière d'un clapet de non-retour qui comporte un élément obturateur (12) et un siège de clapet (11), l'élément obturateur (12) étant précontraint au moyen d'un ressort de clapet (13) qui est disposé dans une cage porte-ressort (14) coopérant d'un côté avec le piston de pompe (3) et de l'autre côté avec un ressort de pression (4) qui met sous précontrainte le piston de pompe (3), la cage porte-ressort (14) étant fixée sur le piston de pompe (3), et le ressort de pression (4) étant fixé sur la cage porte-ressort (14), l'une au moins des fixations étant constituée par un montage par friction ou par adhérence et/ou par un montage par conjugaison des formes,
**caractérisée en ce que** le piston de pompe (3) comporte, à son extrémité tournée vers la cage porte-ressort (14), un chanfrein d'assemblage ou une rampe de dilatation plat(e)(22) qui rejoint un détalonnement (21) adapté à accueillir des éléments (20) de la cage porte-ressort (14).

2. Pompe à piston selon la revendication 1, **caractérisée en ce que** la cage porte-ressort (14) comporte des éléments (20, 20') de montage par conjugaison des formes, qui coopèrent avec le détalonnement (21) du piston de pompe (3) ou avec le ressort de pression (4).

3. Pompe à piston selon la revendication 2, **caractérisée en ce que** la cage porte-ressort (14) est pourvue d'éléments ponts (18) qui comportent une extrémité libre (19) sur laquelle sont aménagés les éléments (20, 20') de montage par conjugaison des formes.

4. Pompe à piston selon la revendication 3, **caractérisée en ce que** les extrémités libres (19) des éléments ponts (18) présentent une surface résistant à l'usure et/ou glissante.

5. Pompe à piston selon l'une des revendications précédentes, **caractérisée en ce que** la cage porte-ressort (14) comporte au moins une ouverture (17) aménagée à l'extrémité de celle-ci, qui est opposée au piston de pompe (3).

6. Pompe à piston selon la revendication 1, **caractérisée en ce que** le ressort de pression (4) est configuré de manière à se resserrer en une forme conique à l'extrémité de celui-ci, qui est reliée à la cage porte-ressort (14).

7. Pompe à piston selon la revendication 6, **caractérisée en ce que** le ressort de pression (4) est configuré de manière que ses deux extrémités se resserrent en une forme conique.
